# EUROPEAN PATENT SPECIFICATION

(11) **EP 2 529 512 B1**
(45) Date of publication and mention of the grant of the patent: **04.05.2016**
(21) Application number: 10844883.8
(22) Date of filing: 29.01.2010
(51) Int. Cl.: H04L 12/28, H04L 12/70, H04L 12/46, H04L 12/24, H04L 12/753

(54) **CONFIGURATION OF NETWORK LINKS IN A VIRTUAL CONNECTION ENVIRONMENT**
KONFIGURATION VON NETZWERKVERKNÜPFUNGEN IN EINER VIRTUELLEN VERBINDUNGSUMGEBUNG
CONFIGURATION DE LIAISONS DE RÉSEAU DANS ENVIRONNEMENT DE CONNEXION VIRTUELLE

(43) Date of publication of application: 05.12.2012
(73) Proprietor: Hewlett Packard Development Company, L.P., Houston, TX 77070 (US)
(72) Inventor: CHUANG, Mike, Austin, TX 78728 (US)
(74) Representative: Hufton, David Alan
(86) International application number: PCT/US2010/022613
(87) International publication number: WO 2011/093882

(56) References cited:
- US-A1- 2002 009 092
- US-A1- 2002 038 253
- US-A1- 2007 008 982
- US-A1- 2008 310 421
- US-B2- 7 596 101

## Description

### BACKGROUND OF THE INVENTION

### Background of the Invention

As data centers increase server density, server deployment and management continues to be a resource intensive task. A server administrator typically must log on to each server and individually configure each server for communicating on the network. The configuration of the servers and attached network devices (switches, bridges, and routers) must be carefully coordinated to ensure reliable and secure operation. This configuration is manually performed by a server administrator. Accordingly, administrating servers and network devices in data centers can be inefficient, time-consuming, costly, and potentially error prone.

US 2008/0310421 describes methods, apparatus and systems for managing connectivity in a virtual network.

### BRIEF DESCRIPTION OF THE DRAWINGS

Figure 1 is **a** block diagram of a networked computer system utilizing a hidden network in accordance with prior hidden network configured systems.
Figure 2A is a block diagram of a networked computer system utilizing a hidden network with a physical bridging device in accordance with an exemplary embodiment of the invention.
Figure 2B is a block diagram of a networked virtual computer system utilizing a hidden network with a virtual bridging device in accordance with an exemplary embodiment of the invention.
Figure 3 is a block diagram of a networked computer system utilizing a hidden network with a virtual bridging device in accordance with an exemplary embodiment of the invention.
Figure 4 is a flow diagram of a process for configuring a system to establish a Virtual Connection Domain boundary.

The present invention relates to a method according to claim 1, to an apparatus according to claim 10 and to a storage medium according to claim 14.

### DETAILED DESCRIPTION OF THE PREFERRED EMBODIMENTS

Network server management may be automated through the use of a hidden network which exists between a collection of end nodes and a collection of external networks. To the external networks, the hidden network emulates a collection of network ports on the end nodes, and to the end nodes it provides a corresponding set of network connections. The hidden network maintains the connections between end nodes and external networks and transparently adapts as configurations and topologies change. By discovering the identities and monitoring the attached network equipment, the hidden network adapts to changes in cabling topology or network configuration without requiring changes to end node configuration. The hidden network adapts automatically to changes in the configuration and topology of its own elements (switches, bridges, links, etc.) without administrative action by a user.

There is difficulty in automatically managing a collection of servers and network devices from a variety of vendors through standard management protocols such as Simple Network Management Protocol (SNMP). Hidden network can utilize topology management protocols, such as rapid spanning tree protocol (RSTP), to prevent loops in the external network, as discussed previously. In systems which use RSTP to prevent loops some of the uplinks to the data center network are placed in a stand-by state and placed in a blocking mode. While only a single uplink to the data center network is placed in an active state. Those uplinks which are in a standby state are wasted bandwidth. They are there for redundancy, but do not operate as a data path due to their stand-by state.

Embodiments are directed to apparatus, and methods for full utilization of network uplinks in virtual connection environments. The embodiments provide an alternative method to the Virtual Connect (VC) loop prevention logic that maintains the same benefits and simplicity of previous VC solutions, yet allows all uplinks to be actively forwarding traffic at the same time. This can lead to significant improvements by allowing redundancy of connections without the previous wasted bandwidth in networking equipment of previous solutions.

Current Virtual Connect Ethernet network (VC Enet) restrict the number of network uplinks actively forwarding traffic to one individual port or Link Aggregation Group (LAG) in order to achieve a loop-free operation while appearing as a pass-through module to the data center networks by not participating in the data center Ethernet networks' Spanning Tree Protocol (STP) topology calculation. This restriction leads to idle resources when fault-tolerant networks are desired by configuring redundant uplinks to the data center switches.

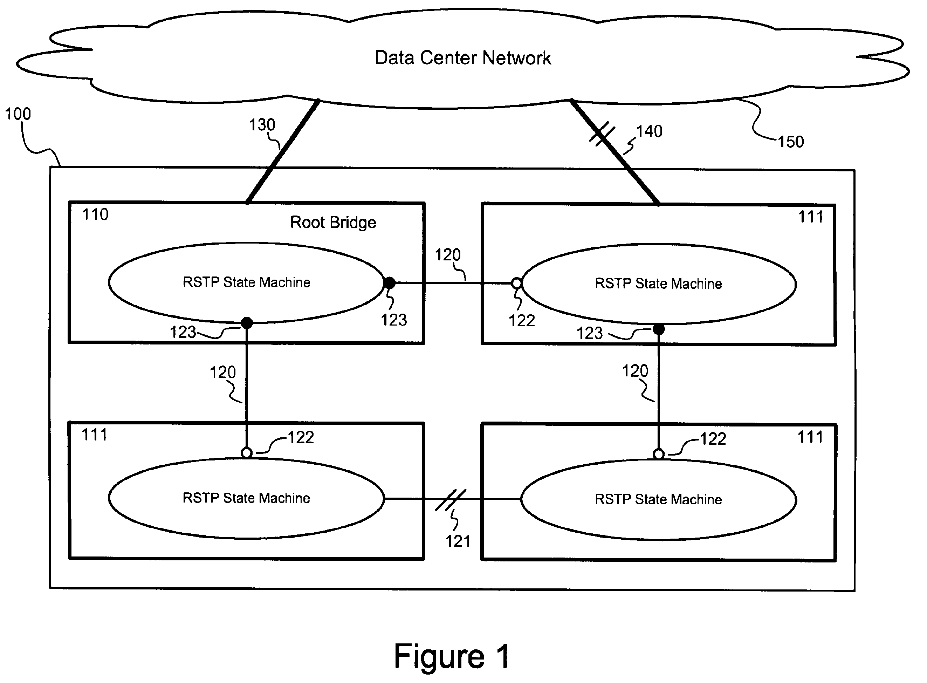

Figure 1 illustrates a networked computer system utilizing a hidden network in accordance with hidden network configured systems as previously described. The Virtual Connect Domain [100] includes a plurality of systems [110, 111] which are interconnected with a plurality of stacking links [120, 121]. These systems utilize a STP to achieve a loop free topology. One STP is the RSTP described above which runs on only the stacking links interconnected within the VC domain. Any protocol method which results in the elimination of loops in the virtual connect domain will be sufficient for these purposes. By applying an algorithm which places some stacking links in stand-by mode [121] while allowing others to remain active [120]. Of the active stacking links, some ports are identified as root ports [122] and others as designated ports [123]. Through the algorithm one system [110,111] is designated as the root bridge [110] (as defined in IEEE 802.1D specification), and the uplink with the best quality based on customer provisioned priority and/or the one with the highest bandwidth is selected as the active uplink [130]. This uplink may be an individual port or an aggregated group of ports formed while using 802.3ad link aggregation. The active uplink is set to a forwarding state, allowing traffic to pass between the virtual domain [100] and the data center network [150], while all other links [140] are placed in stand-by mode, blocked from transmitting any data traffic, resulting in wasted bandwidth.

One possible solution to the wasted bandwidth is to create a plurality VC networks with a single uplink assigned to each network. This allows all uplinks to be active and passing traffic at the same time, however there is no network redundancy built into this configuration. To maintain some redundancy in the configuration, server side redundancy, such as network interface card teaming can be configured. This solution is less than desirable because of the extra time necessary to configure and maintain multiple networks instead of a single network for the Virtual Connect environment.

To eliminate the wasted bandwidth in a VC environment, one embodiment would place an external layer 2 switch at the boundary of the Virtual Connect Domain. To prevent the need for management of the external layer 2 switch, it must operated from a data center network view as edge modules where Ethernet data loops are not possible else it will simply be another switch in the data center which must be managed. From the Virtual Connect Domain view, it must operate as a simple pass through to the Data Center network. To accomplish this, an external layer 2 switch must participate in the spanning tree protocol of the Virtual Connect Domain. By the external switch participating in the spanning tree protocol in the Virtual Connect Domain, the uplinks will participate in the VC's spanning tree protocol the same as the stacking links.

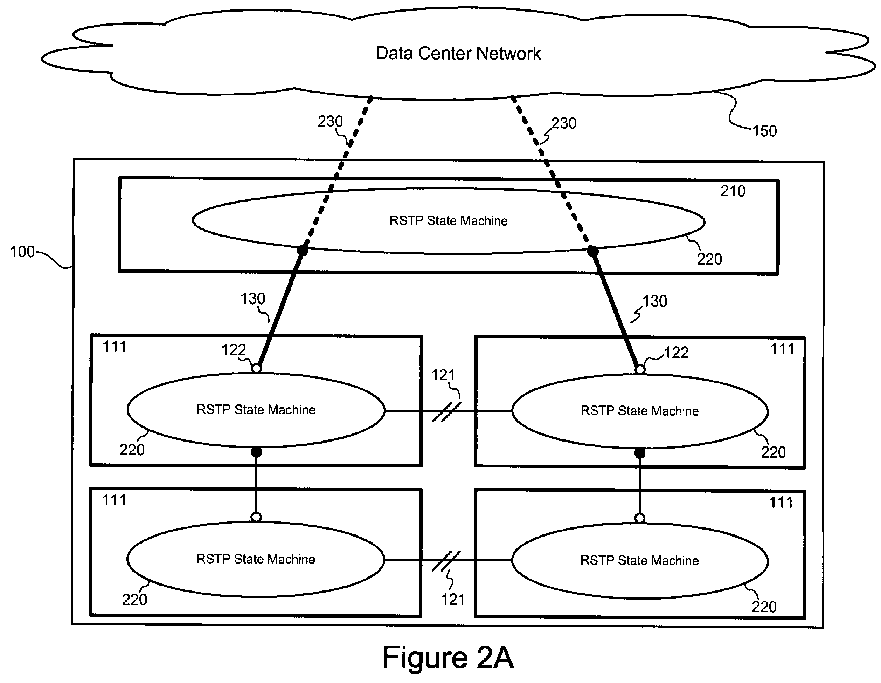

Figure 2A illustrates a system where an external layer 2 switch is incorporated into the Virtual Connect Domain [100]. The external layer 2 switch is configured with the highest priority and thus is always selected by the RSTP state machines [220] as the root bridge, known as an External Root Bridge [210]. Upon convergence of a stable topology by the STP, uplinks [130] are selected as the Root Port [122]. The external root bridge then operates as a simple pass through [230] to connect the uplinks [130] to the data center network [150].

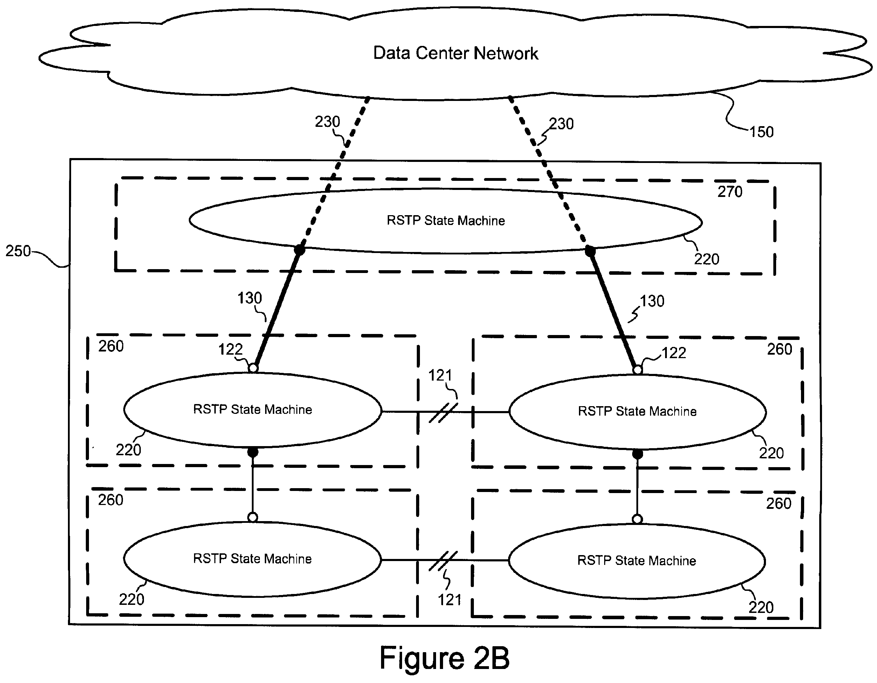

Figure 2B illustrates a system where the Virtual Connect Domain [250] comprises virtual instances of a layer 2 switch [270] and a plurality of instance of virtual servers [260]. The external layer 2 switch is configured with the highest priority and thus is always selected by the RSTP state machines [220] as the root bridge, known as an External Root Bridge 270]. Upon convergence of a stable topology by the STP, uplinks [130] are selected as the Root Port [122]. The external root bridge then operates as a simple pass through [230] to connect the uplinks [130] to the data center network [150].

In another embodiment, a Root Bridge is virtualized and instantiated in each system of the VC Domain. Each virtual instance of this state machine is configured to behave exactly the same in each VC system, creating the illusion of a real external Root Bridge to the VC systems.

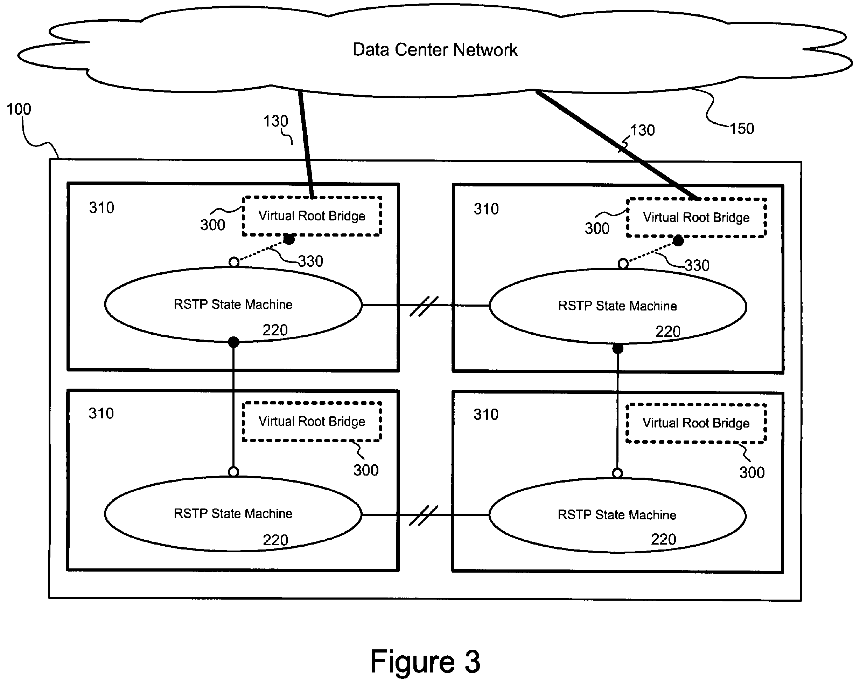

Figure 3 illustrates a system where a virtual root bridge [300] is incorporated into each Virtual Connect system [310]. The virtual root bridge [300] is configured with the highest priority and thus is always selected by the RSTP state machines [220] as the Root Bridge. Upon convergence of a stable topology by the STP, a pass through connection [330] is established between the virtual root bridge [300] and the RSTP State Machine Instance [220]. Since each Virtual Root Bridge [300] is configured to behave identically, and operate as a pass through switch, the result is basically uplinks [130] are selected as the Root Port [122]. The virtual root bridge then operates as a simple pass through [300] to connect the uplinks [130] to the data center network [150].

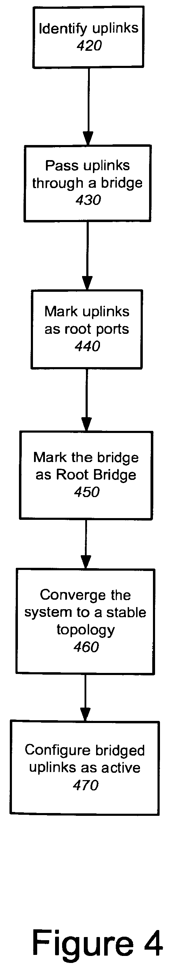

Figure 4 illustrates a flow diagram for establishing a Virtual Connect Domain boundary. Uplinks are identified as those links which connect to systems external to the VC System [420]. All uplinks that are to remain active must pass through a bridge system [430]. In one embodiment, a bridge may be a separate physical hardware device. In another embodiment, a bridge may be a hardware component of a larger computing system. In another embodiment a bridge may be a virtual device within a switch or other computing system. In another embodiment, a bridge may be a plurality of virtual bridge devices, each configured to behave identically, therefore appearing to be a single virtual device. Uplinks which are bridged are candidates to remain active without preventing a system from reaching a stable topology. If an uplink is not bridged, then it can result in a looping back of packets, which does not happen in a stable topology. Uplink ports are marked as root ports [440]. A bridge which contains uplinks is marked as a root bridge [450] to have the highest priority in the RSTP. The bridges then participate in the STP to converge the system to a stable topology [460]. Once the system reaches a stable topology, bridged uplinks are marked as active [470] and operate as a simple pass through to external systems in the data center network.

The flow diagrams in accordance with exemplary embodiments of the present invention are provided as examples and should not be construed to limit other embodiments within the scope of the invention. For instance, the blocks should not be construed as steps that must proceed in a particular order. Additional blocks/steps may be added, some blocks/steps removed, or the order of the blocks/steps altered and still be within the scope of the invention. Further, blocks within different figures can be added to or exchanged with other blocks in other figures. Further yet, specific numerical data values (such as specific quantities, numbers, categories, etc.) or other specific information should be interpreted as illustrative for discussing exemplary embodiments. Such specific information is not provided to limit the invention.

In the various embodiments in accordance with the present invention, embodiments are implemented as a method, system, and/or apparatus. As one example, exemplary embodiments are implemented as one or more computer software programs to implement the methods described herein. The software is implemented as one or more modules (also referred to as code subroutines, or "objects" in object-oriented programming). The location of the software will differ for the various alternative embodiments. The software programming code, for example, is accessed by a processor or processors of the computer or server from long-term storage media of some type, such as a CD-ROM drive or hard drive. The software programming code is embodied or stored on any of a variety of known media for use with a data processing system or in any memory device such as semiconductor, magnetic and optical devices, including a disk, hard drive, CD-ROM, ROM, etc. The code is distributed on such media, or is distributed to users from the memory or storage of one computer system over a network of some type to other computer systems for use by users of such other systems. Alternatively, the programming code is embodied in the memory (such as memory of the handheld portable electronic device) and accessed by the processor using the bus. The techniques and methods for embodying software programming code in memory, on physical media, and/or distributing software code via networks are well known and will not be further discussed herein.

The above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

## Claims

1. A method for establishing connections in a virtual connection environment comprising;
establishing a Virtual Connect Domain boundary [100], said boundary comprising;
a plurality of systems [110, 111, 310];
a plurality of stacking links configured to interconnect the plurality of systems [120, 121];
a plurality of uplinks for connecting the plurality of systems to at least one external system [130, 230, 330]; and
a switch configured to connect the uplinks to the at least one external system;
and **characterised by**:
selecting the switch as a root bridge; converging on a stable topology using a spanning tree protocol based on the selection of the switch as the root bridge; and
operating the switch to pass through the plurality of uplinks to connect to the at least one external system [150].

2. The method of claim 1, wherein a plurality of uplinks are configured as active.

3. The method of claim 1, wherein the switch is configured to have a highest priority and is always selected as the root bridge.

4. The method of claim 3, wherein the switch is a separate hardware system.

5. The method of claim 4, wherein the switch is configured to participate in the systems convergence on a stable topology.

6. The method of claim 1, wherein the switch comprises a virtual switch[270, 300]; and the virtual switch is selected as the root bridge.

7. The method of claim 6, wherein the virtual switch [300] comprises a plurality of virtual instances incorporated into a plurality of systems [310].

8. The method of claim 6, wherein the plurality of virtual instances are configured identically so as to behave as a single root bridge.

9. The method of claim 8, wherein the plurality of virtual instances [300] appear to the at least one external system as a single root bridge.

10. An apparatus configured to establish a Virtual Connect Domain boundary comprising;
a plurality of systems;
a plurality of stacking links configured to interconnect the plurality of systems;
a plurality of uplinks for connecting the plurality of systems to at least one external system; and
a switch configured to connect the uplinks to the at least one external system;
**characterized in that**:
the switch is further configured to be selected as a root bridge for a spanning tree protocol and to operate as a pass through to connect the plurality of uplinks to the at least one external system.

11. The apparatus of claim 10, wherein the switch is a separate hardware system.

12. The apparatus of claim 10, wherein the switch is a virtual device in a computing system

13. The apparatus of claim 12, wherein
the virtual device is a plurality of virtual devices [300] in a computing system [310];
said virtual devices configured to operate and appear to external computing systems as a single virtual device.

14. A tangible computer readable storage medium have instructions for causing a computing system to execute a method, comprising:
establishing a Virtual Connect Domain boundary, said boundary comprising;
a plurality of systems [110, 111, 310];
a plurality of stacking links configured to interconnect the plurality of internal systems [120, 121];
a plurality of uplinks for connecting the plurality of systems to at least one external system [130, 230, 330];
a switch configured to connect the uplinks to the at least one external system;
and **characterised by**:
selecting the switch as a root bridge; converging on a stable topology using a spanning tree protocol based on the selection of the switch as the root bridge; and
operating the switch to pass through the plurality of uplinks to connect to the at least one external system [150].

## Patentansprüche

1. Verfahren zum Aufbauen von Verbindungen in einer virtuellen Verbindungsumgebung, Folgendes umfassend:
Aufbauen einer Virtual-Connect-Domain-Grenze (Virtuelle-Verbindung-Domain-Grenze) [100], wobei die Grenze Folgendes umfasst;
mehrere Systeme [110, 111, 310];
mehrere Stapelverbindungen, konfiguriert, um die mehreren Systeme [120, 121] miteinander zu verbinden;
mehrere Uplinks zum Verbinden der mehreren Systeme mit wenigstens einem externen System [130, 230, 330]; und
einen Switch, konfiguriert, um die Uplinks mit dem wenigstens einen externen System zu verbinden;
und **gekennzeichnet durch**:
Auswählen des Switchs als eine Root-Bridge (Wurzel-Brücke); Konvergieren auf einer stabilen Topologie, unter Verwendung eines Spanning-Tree-Protokolls auf Grundlage der Auswahl des Switchs als die Root-Bridge; und
Bedienen des Switchs, um die mehreren Uplinks zu durchqueren, um eine Verbindung mit dem wenigstens einen externen System [150] herzustellen.

2. Verfahren nach Anspruch 1, wobei mehrere Uplinks als aktiv konfiguriert sind.

3. Verfahren nach Anspruch 1, wobei der Switch konfiguriert ist, eine höchste Priorität aufzuweisen, und immer als die Root-Bridge ausgewählt ist.

4. Verfahren nach Anspruch 3, wobei der Switch ein separates Hardwaresystem ist.

5. Verfahren nach Anspruch 4, wobei der Switch konfiguriert ist, an der Systemkonvergenz zu einer stabilen Topologie teilzunehmen.

6. Verfahren nach Anspruch 1, wobei der Switch einen virtuellen Switch [270, 300] umfasst; und der virtuelle Switch als die Root-Bridge ausgewählt ist.

7. Verfahren nach Anspruch 6, wobei der virtuelle Switch [300] mehrere in mehrere Systeme [310] integrierte virtuelle Instanzen umfasst.

8. Verfahren nach Anspruch 6, wobei die mehreren virtuellen Instanzen derart identisch konfiguriert sind, dass sie sich als eine einzelne Root-Bridge verhalten.

9. Verfahren nach Anspruch 8, wobei die mehreren virtuellen Instanzen [300] dem wenigstens einen externen System als eine einzelne Root-Bridge erscheinen.

10. Vorrichtung, konfiguriert, um eine Virtual-Connect-Domain-Grenze aufzubauen, Folgendes umfassend:
mehrere Systeme;
mehrere Stapelverbindungen, konfiguriert, um die mehreren Systeme miteinander zu verbinden;
mehrere Uplinks zum Verbinden der mehreren Systeme mit wenigstens einem externen System; und
einen Switch, konfiguriert, um die Uplinks mit dem wenigstens einen externen
System zu verbinden;
**dadurch gekennzeichnet, dass**:
der Switch ferner konfiguriert ist, als eine Root-Bridge für ein Spanning-Tree-Protokoll ausgewählt zu werden und als ein Durchgang zu fungieren, um die mehreren Uplinks mit dem wenigstens einen externen System zu verbinden.

11. Vorrichtung nach Anspruch 10, wobei der Switch ein separates Hardwaresystem ist.

12. Vorrichtung nach Anspruch 10, wobei der Switch ein virtuelles Gerät in einem Computersystem ist.

13. Vorrichtung nach Anspruch 12, wobei
das virtuelle Gerät mehrere virtuelle Geräte [300] in einem Computersystem [310] ist;
die virtuellen Geräte konfiguriert sind, als ein einzelnes virtuelles Gerät zu fungieren und externen Computersystemen als solches zu erscheinen.

14. Greifbares computerlesbares Speichermedium weist Anweisungen auf, um zu bewirken, dass ein Computersystem ein Verfahren ausführt, Folgendes umfassend:
Aufbauen einer Virtual-Connect-Domain-Grenze, wobei die Grenze Folgendes umfasst;
mehrere Systeme [110, 111, 310];
mehrere Stapelverbindungen, konfiguriert, um die mehreren internen Systeme [120, 121] miteinander zu verbinden;
mehrere Uplinks zum Verbinden der mehreren Systeme mit wenigstens einem externen System [130, 230, 330];
einen Switch, konfiguriert, um die Uplinks mit dem wenigstens einen externen System zu verbinden;
und **gekennzeichnet durch**:
Auswählen des Switchs als eine Root-Bridge; Konvergieren zu einer stabilen Topologie, unter Verwendung eines Spanning-Tree-Protokolls auf Grundlage der Auswahl des Switchs als die Root-Bridge; und
Bedienen des Switchs, um die mehreren Uplinks zu durchqueren, um eine Verbindung mit dem wenigstens einen externen System [150] herzustellen.

## Revendications

1. Procédé d'établissement de connexions dans un environnement de connexion virtuelle comprenant :
l'établissement d'une limite de Domaine de Connexion Virtuel (100), ladite limite comprenant :
plusieurs systèmes (110, 111, 310) ;
plusieurs liens d'empilement configurés pour interconnecter la pluralité de systèmes (120, 121) ;
plusieurs liaisons montantes pour connecter la pluralité de systèmes à au moins un système externe (130, 230, 330) ; et
un commutateur configuré pour connecter les liaisons montantes audit système externe ;
et **caractérisé par** :
la sélection d'un commutateur comme pont racine ; la convergence sur une topologie stable en utilisant un protocole STP basé sur la sélection de l'interrupteur comme pont racine ; et
l'actionnement de l'interrupteur pour passer la pluralité de liaisons montantes pour se connecter audit système externe (150).

2. Procédé selon la revendication 1, dans lequel plusieurs liaisons montantes sont configurées comme actives.

3. Procédé selon la revendication 1, dans lequel l'interrupteur est configuré pour avoir une priorité maximale et est toujours choisi comme pont racine.

4. Procédé selon la revendication 3, dans lequel l'interrupteur est un système matériel séparé.

5. Procédé selon la revendication 4, dans lequel l'interrupteur est configuré pour participer à la convergence des systèmes sur une topologie stable.

6. Procédé selon la revendication 1, dans lequel l'interrupteur comprend un interrupteur virtuel (270, 300) ; et
l'interrupteur virtuel est choisi comme pont racine.

7. Procédé selon la revendication 6, dans lequel l'interrupteur virtuel (300) comprend plusieurs instances incorporées dans une pluralité de systèmes (310).

8. Procédé selon la revendication 6, dans lequel les plusieurs instances virtuelles sont configurées de la même façon de manière à se comporter comme un unique pont racine.

9. Procédé selon la revendication 8, dans lequel les plusieurs instances virtuelles (300) apparaissent comme un unique pont racine audit système externe.

10. Appareil configuré pour établir une limite de Domaine de Connexion Virtuel comprenant :
plusieurs systèmes ;
plusieurs liens d'empilement configurés pour interconnecter la pluralité de systèmes ;
plusieurs liaisons montantes pour connecter la pluralité de systèmes audit système externe ; et
un commutateur configuré pour connecter les liaisons montantes audit système externe ;
**caractérisé en ce que** :
l'interrupteur est, en outre, configuré pour être choisi comme pont racine pour un protocole STP et pour fonctionner comme passage pour connecter la pluralité de liaisons montantes vers ledit système externe.

11. Appareil selon la revendication 10, dans lequel l'interrupteur est un système matériel séparé.

12. Appareil selon la revendication 10, dans lequel l'interrupteur est un dispositif virtuel dans un système informatique.

13. Appareil selon la revendication 12, dans lequel :
le dispositif virtuel est une pluralité de dispositifs virtuels (300) dans un système informatique (310) ;
lesdits dispositifs virtuels étant configurés pour fonctionner et apparaître aux yeux de systèmes informatiques externes comme un unique dispositif virtuel.

14. Support d'informations tangible lisible par un ordinateur, ayant des instructions pour amener un système informatique à exécuter un procédé, comprenant :
l'établissement d'une limite de Domaine de Connexion Virtuel, ladite limite comprenant :
plusieurs systèmes (110, 111, 310) ;
plusieurs liens d'empilement configurés pour interconnecter la pluralité de systèmes (120, 121) ;
plusieurs liaisons montantes pour connecter la pluralité de systèmes à au moins un système externe (130, 230, 330) ; et
un commutateur configuré pour connecter les liaisons montantes
audit système externe ;
et **caractérisé par** :
la sélection d'un commutateur comme pont racine convergeant sur une topologie stable en utilisant un protocole STP basé sur la sélection de l'interrupteur comme pont racine ; et
actionnement de l'interrupteur pour passer la pluralité de liaisons montantes pour se connecter audit système externe (150).
